# EUROPEAN PATENT APPLICATION

(11) **EP 2 870 996 A1**
(43) Date of publication of application: **13.05.2015**
(21) Application number: 14191951.4
(22) Date of filing: 05.11.2014
(51) Int. Cl.: B01J 23/72, B01D 53/94, B01J 29/85

(54) **Exhaust gas control catalyst**

(30) Priority: 08.11.2013 JP 2013232229
(71) Applicant: Toyota Jidosha Kabushiki Kaisha, Toyota-shi, Aichi-ken 471-8571 (JP)
(72) Inventor: Shimmyo, Yusuke, Toyota-Shi, Aichi-ken, 471-8571 (JP); Sobue, Yuichi, Toyota-shi, Aichi-ken, 471-8571 (JP)
(74) Representative: Hart-Davis, Jason

(57) **Abstract**

A silicoaluminophosphate exhaust gas control catalyst that has a chabazite-type structure, in which ion-exchange sites on the Si have been ion-exchanged with copper, wherein the catalyst satisfies the condition 0.07 ≤ Si/(Si + Al + P) s 0.12 (where, Si/(Si + Al + P) is a molar ratio) and has an amount of ion-exchanged copper of 2 to 4 weight%.

## Description

### BACKGROUND OF THE INVENTION

### 1. Field of the Invention

The invention relates to an exhaust gas control catalyst that purifies the exhaust gas discharged from an internal combustion engine. The invention more particularly relates to an exhaust gas control catalyst for the purification of the exhaust gas from diesel engines.

### 2. Description of Related Art

Harmful components, such as carbon monoxide (CO), hydrocarbons (HC), and nitrogen oxides (NOₓ), are present in the exhaust gas discharged from the engines that are generally used as vehicle drive power sources, i.e., diesel engines and gasoline engines, and release into the atmosphere is carried out after the purification of these harmful components by an exhaust gas control catalyst. Among these harmful components, NOₓ is recognized as a cause of photochemical smog and to cause problems for the human respiratory system.

Urea selective catalytic reduction (SCR), which utilizes the selective reduction of NOₓ by urea, has entered into widespread use in recent years for the reduction of the NOₓ present in exhaust gases. Urea SCR offers the advantages of having a higher NOₓ reduction capacity than other control systems and of having a broader usable temperature range. In urea SCR, purification of the exhaust gas is carried out by using the ammonia provided by the hydrolysis of urea to reduce the NOₓ in an exhaust gas to nitrogen. Urea SCR is also effective for the reduction of NOₓ in atmospheres that have a relatively high oxygen concentration, such as the exhaust gas from diesel engines.

Zeolite catalysts that support a metal catalyst such as, for example, copper or iron, can be used for urea SCR.

For example, Published Japanese Translation of PCT application No. 2010-519038 (JP 2010-519038 A) describes a catalyst that characteristically contains a zeolite with a chabazite-type structure in which the molar ratio of silica to alumina is greater than about 15 and the atomic ratio of copper to aluminum exceeds about 0.25. It is taught that this catalyst can be used to remove NOₓ from a gaseous medium over a broad temperature range and that it exhibits an excellent hydrothermal stability at high temperatures. JP 2010-519038 A describes a catalyst in which copper has been ion-exchanged at the ion-exchange sites on the aluminum in an aluminosilicate that has the Al + Si framework commonly recognized as SSZ-13.

One problem with the catalyst of JP 2010-519038 A is that its NOₓ reduction capacity undergoes a substantial decline at low temperatures, i.e., 200°C and below, and as a consequence at low temperatures, e.g., immediately after engine start, the NOₓ in the exhaust gas discharged from the engine is released into the atmosphere without reduction of the NOₓ. This is thought to be due to a low amount of ammonia adsorption at the catalyst and hence a decline at low temperatures in the NOₓ reduction capacity capable of utilizing adsorbed ammonia for urea SCR. Another problem is the high cost of the materials used for the synthesis of the SSZ-13 used in the catalyst of JP 2010-519038 A.

Moreover, the exhaust gas from a diesel engine contains not only gaseous harmful components such the carbon monoxide (CO), hydrocarbon (HC), and nitrogen oxides (NOₓ) cited above, but rather is a heterogeneous mixture that also includes particulate matter. This particulate matter is removed by an exhaust gas control filter. A filter coated with SCR catalyst (SCRF) can effectively remove the particulate matter as well as the harmful components, e.g., carbon monoxide (CO), hydrocarbon (HC), and nitrogen oxides (NOₓ), and a catalyst that can be effectively utilized by an SCRF is required in order to achieve additional cost reductions and further shrinkage of the system.

As noted above, a problem with the zeolite catalysts is that the NOₓ reduction capacity undergoes a substantial decline at low temperatures of 200°C and below.

### SUMMARY OF THE INVENTION

This invention provides an exhaust gas control catalyst that exhibits a high NOₓ reduction capacity over a broad temperature range.

The inventors discovered that by ion-exchanging the ion-exchange sites on the Si in a silicoaluminophosphate catalyst with copper and specifying the substitution rate for the ion-exchange sites on the Si and the amount of ion-exchanged copper, the catalyst then has a high NOₓ reduction capacity over a broad temperature range. The invention was achieved based on this discovery.

An aspect of the invention relates to a silicoaluminophosphate exhaust gas control catalyst that has a chabazite-type structure with copper ion-exchanged at ion-exchange sites on Si. The composition of this silicoaluminophosphate catalyst satisfies the condition 0.07 ≤ Si/(Si + Al + P) ≤ 0.12 (Si/(Si + Al + P) in the formula is a molar ratio); 12.5 mol% to 17.5 mol% of the ion-exchange sites on the Si therein are substituted by the copper; and an amount of ion-exchanged copper therein is 2 weight% to 4 weight%.

The silicoaluminophosphate may be SAPO-34.

The amount of ion-exchanged copper may be 2.5 weight% to 3.5 weight%.

The invention can provide an exhaust gas control catalyst that exhibits a high NOₓ reduction capacity over a broad temperature range.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram that shows the mechanism of Brønsted acid site formation in a silicoaluminophosphate; and
FIG. 2 is a diagram that shows the NOₓ reduction capacity of the catalyst according to Example 1 and a catalyst according to a Comparative Example.

### DETAILED DESCRIPTION OF EMBODIMENTS

Embodiments of the invention are described in detail herebelow.

### 1. The silicoaluminophosphate catalyst

Embodiments of the invention relate to a silicoaluminophosphate exhaust gas control catalyst. This catalyst is a copper ion-exchanged silicoaluminophosphate catalyst that has a chabazite-type structure.

A "silicoaluminophosphate" has a structure in which a portion of the Si in the SiO₄ tetrahedra in a zeolite is replaced by trivalent Al and pentavalent P. Here, "zeolite" refers to a hydrated aluminosilicate that internally incorporates pores at the molecular level and is represented by the general formula M_{2/n}O · Al₂O₃ · xSiO₂ · yH₂O (M is a metal such as Na, K, Ca, or Ba, n is the valence, and x and y are coefficients). The silicoaluminophosphates can be exemplified by SAPO-5, SAPO-11, SAPO-14, SAPO-17, SAPO-18, SAPO-34, SAPO-39, and SAPO-42.

The silicoaluminophosphate catalyst in embodiments of the invention has a chabazite-type structure. SAPO-34 is a preferred example of a silicoaluminophosphate that has a chabazite-type structure.

This silicoaluminophosphate catalyst may contain any metal atom other than Si and Al. For example, it may contain sodium (Na), potassium (K), magnesium (Mg), calcium (Ca), iron (Fe), cobalt (Co), nickel (Ni), copper (Cu), zinc (Zn), silver (Ag), or lead (Pb).

The silicoaluminophosphate satisfies the condition 0.07 ≤ Si/(Si + Al + P) ≤ 0.12 (Si/(Si + Al + P) in the formula is the molar ratio) in embodiments of the invention.

This Si/(Si + Al + P) molar ratio can be determined by inductively coupled plasma (ICP).

The particle diameter of the silicoaluminophosphate catalyst is less than 1 µm in an embodiment of the invention. 0.005 µm < particle diameter < 1 µm is more preferred and 0.01 µm < particle diameter < 1 µm is particularly preferred. Here, the particle diameter of the zeolite catalyst denotes the average particle diameter. The particle diameter can be determined using scanning electron microscopy (SEM).

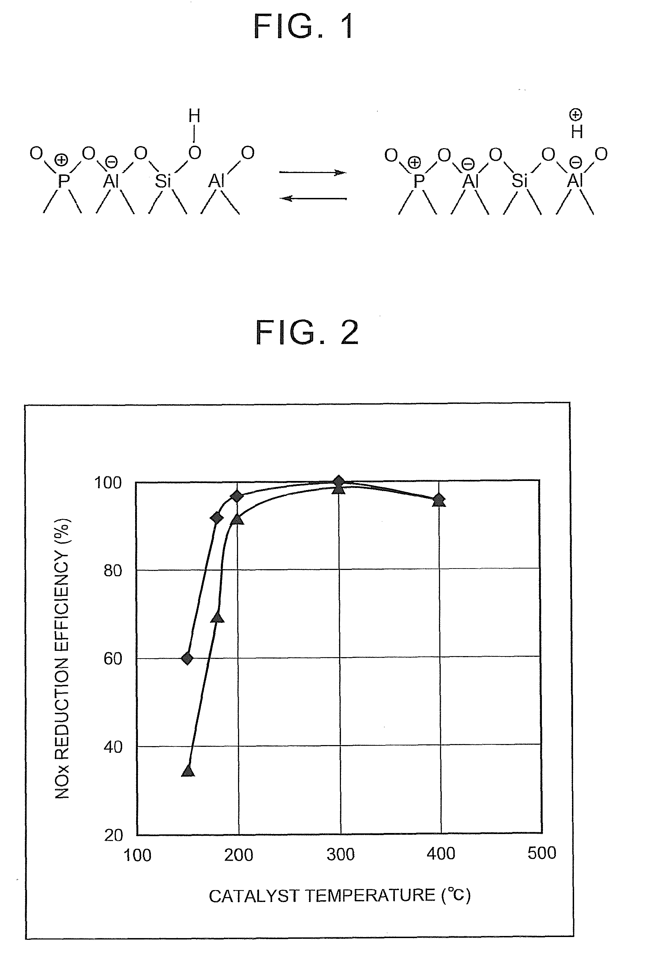

FIG. 1 shows an example of a silicoaluminophosphate skeleton. In a silicoaluminophosphate, a portion of the tetravalent Si in the SiO₄ tetrahedra in the zeolite is replaced by trivalent A1 and pentavalent P, and ion-exchange sites are present that form a Brønsted acid site on the Si. The types of acid sites in a solid acid catalyst are broadly classified into Brønsted acid sites and Lewis acid sites. According to the definition of Brønsted-Lowry acid · base groups, a Brønsted acid is an acid that releases a proton (H⁺), while a Lewis acid is an acid that mediates an acid reaction by accepting an electron pair, regardless of the H⁺ transfer. As shown in FIG. 1, a Brønsted acid site is formed on the Si by the addition of a proton to the -O- that bridges the Si and Al.

The catalyst according to an embodiment of the invention is a silicoaluminophosphate in which the ion-exchange sites on the Si have been ion-exchanged with copper. In this invention, the "ion-exchange sites on the Si" denote the -O- groups that become Brønsted acid sites and are adjacent to an Si atom. Thus, the silicoaluminophosphate in this invention undergoes ion-exchange at the Brønsted acid sites.

The amount of ion-exchanged copper for the silicoaluminophosphate catalyst of this embodiment is 2 weight% to 4 weight%, preferably 2.5 weight% to 3.5 weight%, and more preferably 3 weight%. The NOₓ reduction capacity of the catalyst at low temperatures of 200°C and below declines when the amount of ion-exchanged copper is less than 2 weight%; the NOₓ reduction capacity of the catalyst at high temperatures of 400°C and above declines when the amount of ion-exchanged copper exceeds 4 weight%. The amount of ion-exchanged copper in the catalyst can be determined from the NOₓ reduction efficiency and the structure retention limits for SAPO.

12.5 mol% to 17.5 mol%, preferably 14 mol% to 16 mol%, and more preferably 15 mol% of the ion-exchange sites on the Si are substituted by copper in the catalyst according to this embodiment. When the substitution rate at the ion-exchange sites on the Si is less than 12.5 mol%, the amount of ammonia adsorption to the catalyst declines and as a consequence the ammonia cannot be effectively utilized in urea SCR. The catalyst cannot retain its structure when the substitution rate at the ion-exchange sites on the Si is higher than 17.5 mol%.

The substitution rate at the ion-exchange sites on the Si can be determined from the amount of ammonia adsorption and the structure retention limits for SAPO.

The catalyst according to embodiments of the invention can be used as is; or a binder, e.g., an alumina sol or a silica sol, may be added to the catalyst powder, which may then be molded into a prescribed shape for use; or it may be used by adding water to the catalyst powder to prepare a slurry, which may then be coated on a fireproof substrate having the shape of, for example, a honeycomb.

### 2. Synthesis of the silicoaluminophosphate catalyst

The catalyst according to embodiments of the invention can be synthesized by ion-exchanging the silicoaluminophosphate with copper.

The silicoaluminophosphate can be synthesized by introducing a mixture of a silicon source, an aluminum source, a phosphorus source, and a structure-directing agent into a pressure-resistant stainless steel vessel and carrying out crystallization at a prescribed temperature.

The silicoaluminophosphate may also be synthesized by introducing a dry gel, provided by removing the water from the mixture, into a pressure-resistant vessel without contact with water or water containing a structure-directing agent, and carrying out crystallization while supplying steam.

The "silicon source" denotes a silicon-containing compound starting material that is capable of becoming a constituent component of the silicoaluminophosphate. The silicon source should be capable of becoming a constituent component of the silicoaluminophosphate, but is not otherwise particularly limited. Examples are tetraalkyl orthosilicate, silica, silica gel, pyrolyzed silica, precipitated silica, colloidal silica, water glass, wet-method silica, amorphous silica, fumed silica, sodium silicate, kaolinite, diatomaceous earth, and aluminum silicate.

The "aluminum source" denotes an aluminum-containing compound starting material that is capable of becoming a constituent component of the silicoaluminophosphate. The aluminum source should be capable of becoming a constituent component of the silicoaluminophosphate, but is not otherwise particularly limited. Examples are aluminate salts, aluminum oxide, aluminum oxyhydroxide, aluminum hydroxide, aluminum salts (e.g., aluminum chloride, aluminum nitrate, aluminum sulfate), aluminum alkoxides (e.g., aluminum isopropoxide), alumina white, and aluminum fluoride.

The "phosphorus source" denotes a phosphorus-containing compound starting material that is capable of becoming a constituent component of the silicoaluminophosphate. The phosphorus source should be capable of becoming a constituent component of the silicoaluminophosphate, but is not otherwise particularly limited. Examples are phosphoric acid and aluminum phosphate.

The "structure-directing agent" is a compound for determining the structure of the silicoaluminophosphate. There are no particular limitations on the structure-directing agent, and the various conventional structure-directing agents can be used. Examples are organic bases and particularly quaternary ammonium compounds and amines. More specific examples are tetraethylammonium hydroxide (TEAOH) and its phosphate salt, fluoride, chloride, bromide, and acetate salt; dipropylamine (DPA); triethylamine; cyclohexylamine; 1-methylimidazole; morpholine; pyridine; piperidine; and diethylethanolamine (DEA).

For example, liquid-phase ion-exchange methods and solid-phase ion-exchange methods can be used as the method for ion-exchanging the silicoaluminophosphate with copper.

Liquid-phase ion-exchange methods are methods in which ion-exchange is performed by dispersing or immersing the silicoaluminophosphate in a solution of a copper salt, while solid-phase ion-exchange methods are methods in which the silicoaluminophosphate is mixed with a copper salt or oxide and ion-exchange is performed by heat treatment in a reducing atmosphere or an inert atmosphere.

The copper salt that can be used for copper ion-exchange can be exemplified, without particular limitation, by copper acetate, copper chloride, copper sulfate, and copper nitrate. The copper salt that can be used for copper ion-exchange may be used, without particular limitation, in an amount that provides the previously indicated amount for the amount of ion-exchanged copper in the resulting catalyst.

After the ion-exchange treatment has been performed, the obtained catalyst may be washed, dried, for example, at 200 to 300°C, and then calcined at, for example, 500 to 1000°C, to obtain the silicoaluminophosphate catalyst in which the ion-exchange sites on the Si have been ion-exchanged with copper.

### 3. The exhaust gas control filter

The silicoaluminophosphate catalyst according to the embodiments of the invention can be used in an exhaust gas control filter and in particular can be used in an SCR catalyst-coated filter (SCRF). The silicoaluminophosphate catalyst-loaded filter of this embodiment has a high NOₓ reduction capacity over a broad temperature range and in particular has a high NOₓ reduction capacity at low temperatures of 200°C and below.

The exhaust gas control filter according to an embodiment of the invention can be obtained, for example, by microparticulating the catalyst using a ball mill apparatus; then preparing a catalyst slurry from the microparticulated catalyst, a binder, and deionized water; and coating this catalyst slurry on a filter support.

Any commercially available binder can be used for the binder; for example, a colloidal silica, colloidal alumina, titanium oxide sol, cerium oxide sol, tin oxide sol, or other metal oxide sol can be used. The selection of the binder may be made considering, for example, the viscosity when the catalyst is slurried, the attachment force, and so forth, and may be made in conformity with the composition of the catalyst.

The invention is more specifically described below using examples. However, the technical scope of the invention is not limited to or by these examples.

### Example 1: Silicoaluminophosphate catalyst synthesis

For the silicoaluminophosphate catalyst, a SAPO-34 was produced based on the method described in Japanese Patent Application Publication No. 2012-24674 (JP 2012-24674 A) in which 15 mol% of the ion-exchange sites on the Si were ion-exchanged with copper and the amount of ion-exchanged copper was 3 weight%. The elemental analysis of the Si, Al, and P in the catalyst was checked by ICP.

### Comparative Example

A catalyst provided by the copper ion-exchange of SSZ-13, an aluminosilicate having an Al + Si framework, was used as a Comparative Example catalyst. This catalyst was synthesized by the method described in JP 2010-519038 A. This catalyst is a catalyst with a chabazite structure in which copper is the active site.

### Example 2: Evaluation of the NOₓ reduction capacity of the catalysts of Example 1 and the Comparative Example

The NOₓ reduction capacities of the Example 1 catalyst and the Comparative Example catalyst were evaluated. After establishing a steady-state condition at the particular temperature with a gas with a gas composition of O₂ = 8%, CO₂ = 10%, H₂O = 5%, CO = 800 ppm, C₃H₆ = 600 ppm, and NO = 300 ppm, at a gas flow rate of 30 L/minute, NH₃ of 300 ppm was added and the NOₓ reduction efficiency was determined once the variations in the gas composition had stabilized. The NOₓ reduction efficiency as a function of the catalyst temperature is shown in FIG. 2 for the catalysts of Example 1 and the Comparative Example. In FIG. 2, the diamond gives the NOₓ reduction efficiency for the Example 1 catalyst, while the solid triangle gives the NOₓ reduction efficiency for the Comparative Example catalyst.

FIG. 2 shows that the Example 1 catalyst had a better NOₓ reduction efficiency over a broad temperature range than did the Comparative Example catalyst, and in particular showed that the former had a very high NOₓ reduction efficiency at temperatures of 200°C and below.

### Example 3: Evaluation of the influence of the amount of ion-exchanged copper on the NOₓ reduction capacity

The influence of the amount of ion-exchanged copper on the NOₓ reduction capacity of the catalyst was evaluated by preparing catalysts by changing the amount of ion-exchanged copper in the Example 1 catalyst as shown in Table 1 below and measuring the NOₓ reduction efficiency of each of these catalysts at temperatures of 200, 300, 400, and 550°C. Testing was carried out as described in Example 2.

The amount of ion-exchanged copper in each case and the NOₓ reduction efficiency at each catalyst temperature are given in Table 1.

**[Table 1]**

| amount of ion-exchanged copper (weight%) | NOₓ reduction efficiency (%) | | | |
|---|---|---|---|---|
| | 200°C | 300°C | 400°C | 550°C |
| 2.3 | 70.5 | 83.6 | 79.6 | 62.5 |
| 2.5 | 76.3 | 90.0 | 76.3 | 51.6 |
| 3.3 | 78.0 | 91.0 | 81.8 | 53.1 |
| 3.9 | 73.2 | 88.5 | 79.2 | 44.4 |
| 4.5 | 70.1 | 87.8 | 79.7 | 51.8 |
| 5.1 | 78.8 | 83.6 | 75.8 | 27.5 |
| 6.2 | 70.8 | 87.0 | 68.8 | 12.4 |

According to Table 1, the amount of ion-exchanged copper had little influence on the NOₓ reduction efficiency at catalyst temperatures of 200°C and 300°C, while at catalyst temperatures of 400°C and 550°C a trend appeared in which the NOₓ reduction efficiency declined as the amount of ion-exchanged copper increased. Based on these results, it was shown that an excellent NOₓ reduction capacity is present over a broad temperature range when the amount of ion-exchanged copper in the catalyst is in the range from 2 to 4 weight%.

### Example 4: Evaluation of the influence of the substitution rate at the ion-exchange sites on Si and the amount of ion-exchanged copper in the catalyst on the amount of ammonia adsorption

The influence of the Si substitution rate in the catalyst and the amount of ion-exchanged copper in the catalyst on the amount of ammonia (NH₃) adsorption by the catalyst was evaluated by changing the substitution rate at the ion-exchange sites on Si (Si substitution rate) in the Example 1 catalyst as shown in Table 2 and by changing the amount of ion-exchanged copper in the Example 1 catalyst as shown in Table 2. Saturation adsorption by NH₃ was carried out at 150°C using a gas flow rate of 30 L/minute and a gas composition of O₂ = 8%, CO₂ = 10%, H₂O = 5%, and NH₃ = 300 ppm, after which the amount of adsorption was determined from the amount of NH₃ desorbed when the temperature was raised to 600°C.

**[Table 2]**

| | amount of ion-exchanged copper (weight%) | amount of NH₃ desorption (%) |
|---|---|---|
| Si substitution rate = 10 mol% | 2.3 | 39.9 |
| | 3.3 | 40.4 |
| | 5.1 | 45.9 |
| Si substitution rate = 15 mol% | 3.9 | 48.5 |
| | 6.2 | 47.1 |

According to Table 2, the catalysts having a 15 mol% Si substitution rate had a higher amount of ammonia desorption at each amount of ion-exchanged copper than did the catalysts having a 10 mol% Si substitution rate, and thus the former exhibited a higher amount of ammonia adsorption. It was therefore shown that the catalysts with a 15 mol% Si substitution rate could more effectively utilize, for urea SCR, the ammonia produced from the urea than could the catalysts having a 10 mol% Si substitution rate.

The use of the exhaust gas control catalyst of the embodiments of the invention makes possible an effective NOₓ reduction over a broad temperature range.

## Claims

1. A silicoaluminophosphate exhaust gas control catalyst having a chabazite-type structure with copper ion-exchanged at ion-exchange sites on Si, **characterized in that**
a composition of the silicoaluminophosphate catalyst satisfies a condition 0.07 ≤ Si/(Si + Al + P) s 0.12 wherein Si/(Si + Al + P) is a molar ratio;
12.5 to 17.5 mol% of the ion-exchange sites on the Si are substituted by the copper; and
an amount of the ion-exchanged copper is 2 to 4 weight%.

2. The catalyst according to claim 1, wherein the silicoaluminophosphate is SAPO-34.

3. The catalyst according to claim 1 or 2, wherein the amount of the ion-exchanged copper is 2.5 to 3.5 weight%.

4. Use of a catalyst according to any of claims 1 to 3 in the treatment of gases containing nitrogen oxides (NOx).

5. Use according to claim 4, wherein the nitrogen oxides (NOx) are reduced in the presence of ammonia.

6. Use according to claim 4 or 5, wherein the nitrogen oxides (NOx) are reduced in a urea selective catalytic reduction process.

7. Use according to any of claims 4 to 6, wherein the gases containing nitrogen oxides (NOx) treated are exhaust gases discharged from an internal combustion engine.
